(19) Europäisches Patentamt
European Patent Office
Office européen des brevets

(11) Veröffentlichungsnummer: **0 021 130**
**A1**

(12) **EUROPÄISCHE PATENTANMELDUNG**

(21) Anmeldenummer: **80103055.2**

(22) Anmeldetag: **02.06.80**

(51) Int. Cl.³: **C 08 F 8/00**
// A61L15/00

(30) Priorität: **09.06.79 DE 2923430**

(43) Veröffentlichungstag der Anmeldung: **07.01.81**
**Patentblatt 81/1**

(84) Benannte Vertragsstaaten: **BE DE FR GB IT NL**

(71) Anmelder: **HOECHST AKTIENGESELLSCHAFT, KALLE,**
**Patentabteilung Postfach 3540,**
**D-6200 Wiesbaden 1 (DE)**

(72) Erfinder: **Holst, Arno, Dr., Drusustrasse 3,**
**D-6200 Wiesbaden (DE)**
Erfinder: **Perplies, Eberhard, Dr., Rhönstrasse 11,**
**D-6229 Walluf (DE)**

(54) **Verfahren zur Herstellung von quellfähigen, vernetzten und veretherten Polyvinylderivaten und deren Verwendung.**

(57) Die Erfindung betrifft ein Verfahren zur Herstellung von quellfähigen, zu mehr als 40 Gew.% wasserunlöslichen, vernetzten und veretherten Polyvinylderivaten, in dem Polyvinylacetat unter vorhergehender, gleichzeitiger oder nachfolgender Vernetzung mit mindestens einem bifunktionell gegenüber Hydroxylgruppen reaktionsfähigen Vernetzungsmittel in wäßrig-alkalischem, gegebenenfalls ein organisches Lösemittel enthaltendem Medium verethert wird. Es werden in diesem Verfahren bevorzugt auf 1 Mol Polyvinylacetat 1,0 bis 3,5 Mol Alkalihydroxid, 0,5 bis 5,0 Mol Wasser, 0,01 bis 0,5 Mol Vernetzungsmittel und 0,1 bis 1,5 Mol Veretherungsmittel eingesetzt. Die Vernetzungsmittel sind insbesondere Dichloressigsäure, Phosphoroxychlorid, Bisacrylamidoderivate oder Epichlorhydrin, als Veretherungsmittel wird bevorzugt eine Monohalogenalkancarbonsäure oder ihr Salz eingesetzt. Die nach diesem Verfahren hergestellten vernetzten und veretherten Polyvinylderivate können zur Aufnahme und/oder Zurückhaltung von wäßrigen Flüssigkeiten oder von Feuchte Verwendung finden.

EP 0 021 130 A1

H O E C H S T   A K T I E N G E S E L L S C H A F T
KALLE Niederlassung der Hoechst AG



# Verfahren zur Herstellung von quellfähigen, vernetzten und veretherten Polyvinylderivaten und deren Verwendung

Die Erfindung betrifft ein Verfahren zur Herstellung von quellfähigen, zu mehr als 40 Gew.-% wasserunlöslichen, vernetzten und veretherten Polyvinylderivaten und die Verwendung dieser Ether.

Quellfähige hochmolekulare Verbindungen haben beispielsweise große Bedeutung als Zusatz oder alleiniger Bestandteil in Massen, die physiologische Flüssigkeiten wie Harn, Blut, Schweiß oder Speichel aufsaugen können, also auf den Gebieten der Babypflege, der Monatshygiene und für den Arzt- und Krankenhausbedarf. Zum Zeitpunkt der Einreichung dieser Anmeldung besteht beispielsweise der Großteil der Saugkörper in Tampons, Monatsbinden, Windeln, Windelhöschen oder Betteinlagen immer noch aus Cellulose oder regenerierter Cellulose. In zunehmendem Maße wird jedoch die Cellulose wenigstens teilweise durch halb- oder vollsynthetische saugfähige, hochmolekulare Verbindungen ersetzt (z. B. Polyacrylamid-, Polyethylenoxid-, Cellulose- oder Stärkederivate), weil die Anforderungen der Verbraucher einerseits auf weniger voluminöse Gebilde (z. B. Minibinden, Slipeinlagen, dünnere Windelhöschen), andererseits auf größere Saugfähigkeit und ein größeres Rückhaltevermögen für die physiologischen Flüssigkeiten hinzielen.

Ein weiteres Anwendungsgebiet für quellfähige hochmolekulare Verbindungen ist die Verbesserung der Wasserdampfaufnahmefähigkeit und/oder -durchlässigkeit von gebundenen Vliesen, selbsttragenden flächigen Polymergebilden oder Beschichtungen, die für verschiedene technische Anwendungsgebiete von Interesse sind. Dazu zählen ihre substituierenden Anwendungen vor allem für Leder oder bestimmte Textilien auf deren Einsatzgebieten, z. B. für Schuhe (Schuhobermaterial, Futter, Sohlen), Täschnerwaren, Polsterbezüge, Oberbekleidung ("Leder"- und Allwetterbekleidung), Textilien bzw. Haushaltshilfsmittel (Tischdecken, Fenster-"Leder", Wischtücher) oder für Abdeckungen (Zeltmaterial, Planen).

Aus dem Stand der Technik sind bereits einige Verfahrensweisen zur Herstellung vernetzter Polyvinylalkoholether oder von vernetztem Polyvinylalkohol bekannt:

Aus der DE-AS 15 70 191 (= US-PS 3 542 759) ist ein Verfahren zur Herstellung von Ethern aus Mischpolymerisaten von Hydroxylgruppen enthaltenden Verbindungen bekannt. In den dabei entstehenden Ethern sind mindestens 50 % der pro Molekulareinheit des Mischpolymeren veretherbaren Hydroxylgruppen substituiert. Zur Herstellung der Produkte werden zwei Verfahrensvarianten aufgeführt, entweder wird das Mischpolymere (eine vernetzte, Hydroxylgruppen enthaltende Verbindung) mit einem Epoxid oder einem entsprechenden Halogenhydrin verethert, oder die Hydroxylgruppen enthaltende Verbindung wird zuerst verethert und anschließend mit einem bifunktionellen Derivat des Glycerins (z. B. Epichlorhydrin) vernetzt. Beide Verfahrensvarianten werden unter alkalischen Bedingungen ausgeführt und ergeben in

Wasser unlösliche, aber in Wasser, Chloroform, Alkoholen, Ethern oder chlorierten Kohlenwasserstoffen gut quellbare Produkte. Als Hydroxylgruppen enthaltende Verbindung wird neben Dextran, Stärke oder Cellulose auch Polyvinylalkohol genannt. Die Veretherungsreaktion wird in einer ein unpolares organisches Lösemittel wie Heptan enthaltenden Suspension ausgeführt. Die Verfahrensprodukte sollen die Durchführung von Molekularsiebverfahren in mehr oder weniger polaren organischen Lösemitteln ermöglichen.

Das Verfahren zur Herstellung eines frei-fließenden, in Wasser quellbaren hydrophilen Polymerisats in Teilchenform gemäß der DE-AS 22 64 027 wird so durchgeführt, daß man eine Mischung aus einem wasserlöslichen, hydrophilen Polymeren und einem inerten Füllmittel in Anwesenheit von Wasser einer ionisierenden Strahlung aussetzt. Als geeignete wasserlösliche, hydrophile Polymere werden neben Polyethylenoxid oder Celluloseethern auch Polyvinylalkohol oder Polyvinylether genannt; Beispiele für inerte Füllmittel sind Holzmehl, Celluloseflocken oder Talkum.

In der DE-OS 24 03 269 werden Mittel zum Reinigen von Flüssigkeit abgebenden Hautoberflächen, Wunden und Schleimhäuten beschrieben, die dazu ein wasserunlösliches, hydrophiles, unter Gelbildung quellbares Polymeres enthalten, das beispielsweise aus Polyvinylalkohol und einer vernetzenden Komponente hergestellt werden kann.

Aus der AT-PS 223 141 (= US-PS 3 275 576) ist ein Verfahren zur Herstellung vernetzter, veretherter Produkte bekannt,

H O E C H S T  A K T I E N G E S E L L S C H A F T
KALLE Niederlassung der Hoechst AG



bei dem chemisch (z. B. durch Epichlorhydrin) vernetzte, wasserunlösliche, Hydroxylgruppen enthaltende kolloidale Stoffe (u. a. Polyvinylalkohol) mit Verbindungen der allgemeinen Formel X - R - Z unter alkalischen Bedingungen zur Reaktion gebracht werden; in der allgemeinen Formel bedeutet X: Chlor, Brom oder eine Epoxygruppe, R eine Methylen- oder Ethylengruppe und Z die Carboxyl-, Sulfo- oder eine tertiäre Aminogruppe. Beispiele für Verbindungen der allgemeinen Formel X - R - Z sind Chloressigsäure, Chlorethansulfonsäure oder 1-Diethylamino-2,3-epoxypropan. Die Reaktion wird in wäßrigem, gegebenenfalls ein unpolares organisches Lösemittel (z. B. Toluol) enthaltendem Medium durchgeführt, es soll mindestens jede fünfzehnte und maximal jede zweite Hydroxylgruppe des vernetzten kolloidalen Stoffes substituiert werden, um die Produkte als Ionenaustauscher geeignet zu machen.

Das Verfahren zur Herstellung von hochmolekularen hydrophilen Vernetzungsprodukten von u. a. Polyvinylalkohol in Form von Gelkörnern gemäß der DE-OS 14 43 359 (= US-PS 3 208 994) wird in alkalischem Medium mit Polyvinylalkohol und einem Vernetzungsmittel mit Halogen- oder Epoxygruppen (z. B. Epichlorhydrin) so durchgeführt, daß ein Zweiphasensystem (Dispersion) aus Wasser oder einem anderen starkpolaren Lösemittel wie einem Alkohol oder einem Keton als Lösemittel für die zu vernetzende Substanz und aus einem weniger polaren, mit der ersten Flüssigkeit nicht mischbaren organischen Lösemittel wie Toluol, o-Dichlorbenzol, Dichlormethan oder Monochlorethan als Lösemittel für das Vernetzungsmittel zur Anwendung kommt. Zur Stabilisierung

H O E C H S T   A K T I E N G E S E L L S C H A F T
KALLE Niederlassung der Hoechst AG



des Zweiphasensystems können noch wasserunlösliche Polymere (z. B. Polyvinylacetat) zugesetzt werden. Der Stabilisator wird nach der eigentlichen Vernetzung unter hydrolysierenden Bedingungen von den Gelkörnern entfernt. Das molare Mengenverhältnis der zu vernetzenden Verbindung zum Vernetzungsmittel soll wenigstens 1 : 10 betragen. Die Reaktionsprodukte finden als Molekularsiebe Verwendung. Beispielsweise werden 20 g Polyvinylalkohol in 140 $cm^3$ Wasser und 60 $cm^3$ einer wäßrigen 5n NaOH-Lösung gelöst, und diese Lösung wird in 200 $cm^3$ Dichlorethan dispergiert; die Vernetzung erfolgt mit 20 $cm^3$ Epichlorhydrin während 16 h bei 50° C und während 4 h bei 70° C, das Vernetzungsprodukt nimmt 9,1 g pro g des trockenen Produkts an Wasser auf.

Die aus dem Stand der Technik bekannten Verfahren und die danach hergestellten Produkte weisen aber u. a. die folgenden Nachteile auf:

- Die Vernetzungs- und/oder Veretherungsreaktionen werden in relativ große Mengen an organischen Lösemitteln enthaltenden Suspensionen durchgeführt, wodurch einerseits bei der Aufarbeitung (z. B. beim Absaugen zur Abtrennung der festen von den flüssigen oder gelösten Mischungskomponenten) der fertigen Reaktionsgemische größere Lösemittelmengen anfallen, und andererseits - bedingt durch die angequollene Feststoffmasse und eine gewisse "Klebrigkeit" des als Ausgangssubstanz eingesetzten Polyvinylalkohols und der entstehenden Polyvinylderivate - die Auftrennung der Gemischkomponenten verhältnismäßig lange Zeit dauert und nur erschwert durchführbar ist.

- Das Aufnahme- und Rückhaltevermögen der Verfahrensprodukte für wäßrige Flüssigkeiten reicht für viele Anwendungsgebiete noch nicht aus, in denen beispielsweise WRV-Werte von 1.000 und mehr gefordert werden.

- Den zitierten Schriften sind keine konkreten Anregungen zur Vernetzung und Veretherung von Polyvinylalkohol oder von Polyvinylacetat zu entnehmen, die Beispiele beziehen sich nahezu ausschließlich auf die Vernetzung und/oder Veretherung von Cellulose, Stärke oder Dextran. Eine Übertragung der von diesen Verbindungen her bekannten Reaktionsbedingungen auf Polyvinylalkohol oder auf Polyvinylacetat ist aber nicht ohne weiteres möglich, da sich diese allein schon von der Molekülstruktur und den Moleküleinheiten her wesentlich von den Polysacchariden unterscheiden. Lediglich in der DE-OS 14 43 359 wird im Beispiel 13 auch Polyvinylalkohol umgesetzt, allerdings wird ausschließlich eine Vernetzung durchgeführt, das zugesetzte Polyvinylacetat dient lediglich als Suspendierhilfsmittel, eine Vernetzung und Veretherung von Polyvinylacetat kann dabei nicht stattfinden.

Aufgabe der vorliegenden Erfindung ist es, ein Verfahren zur Herstellung von besonders quellfähigen Polyvinylderivaten vorzuschlagen, das mit einer Ausgangssubstanz durchgeführt wird, die weniger hydrophil als Polyvinylalkohol ist und deshalb leichter unter den Wasser enthaltenden Reaktionsbedingungen einer Veretherung und Vernetzung verarbeitet werden kann, und zu Produkten führt, die in ihrem Aufnahme- und Rückhalte-

HOECHST AKTIENGESELLSCHAFT
KALLE Niederlassung der Hoechst AG



vermögen für wäßrige Flüssigkeiten gegenüber den aus dem Stand der Technik bekannten Polyvinylethern verbessert sind.

Die Erfindung geht aus von einem Verfahren zur Herstellung von quellfähigen, zu mehr als 40 Gew.-% wasserunlöslichen, vernetzten und veretherten Polyvinylderivaten. Das erfindungsgemäße Verfahren ist dadurch gekennzeichnet, daß Polyvinylacetat unter vorhergehender, gleichzeitiger oder nachfolgender Vernetzung mit mindestens einem bifunktionell gegenüber Hydroxylgruppen reaktionsfähigen Vernetzungsmittel in wäßrig-alkalischem, gegebenenfalls ein organisches Lösemittel enthaltendem Medium verethert wird.

Wenn die nach dem erfindungsgemäßen Verfahren hergestellten Produkte mit wäßrigen Flüssigkeiten, insbesondere mit mehr als 50 Gew.-% Wassergehalt, oder mit anderweitig mit ihnen in Kontakt tretenden Wassermolekülen (z. B. Wasserdampf) in Wechselwirkung treten, quellen sie. Die Produkte fallen bei der Reaktion normalerweise als Pulver oder Granulate an, die zu feineren Größen bei Bedarf gemahlen werden können. Unter den Begriff "Polyvinylacetat" sollen solche Polyvinylderivate fallen, in denen mindestens 50 %, bevorzugt 70 % der Substituenten Acetat (d. h. Ester der Essigsäure)-Gruppen sind, der Rest der Gruppen können beispielsweise Hydroxylgruppen oder auch Alkylgruppen, Carboxylgruppen oder Estergruppen (die von Acetat verschieden sind) sein, letztere liegen z. B. in Vinylpolymeren vor, die durch Copolymerisation aus Vinylacetat und Maleinsäuredibutylester oder Crotonsäure entstanden sind; es wird auf Römpps Chemie-

H O E C H S T   A K T I E N G E S E L L S C H A F T
KALLE Niederlassung der Hoechst AG



Lexikon, Franckh'sche Verlagsbuchhandlung - Stuttgart, 7. Auflage, 1976, Stichwörter "Polyvinylacetat" und "Polyvinylalkohol" auf den Seiten 2775 und 2776 verwiesen. Das Polyvinylacetat kommt in kleinteiliger Form, bevorzugt als Pulver oder Granulat zum Einsatz.

In einer bevorzugten Ausführungsform wird das erfindungsgemäße Verfahren so durchgeführt, daß auf 1 Mol Polyvinylacetat 1,0 bis 3,5 Mol Alkalihydroxid, 0,5 bis 5,0 Mol Wasser, 0,01 bis 0,5 Mol Vernetzungsmittel und 0,1 bis 1,5 Mol Veretherungsmittel eingesetzt werden. Unter "1 Mol Polyvinylacetat" ist dabei die Molekularmasse in g der Einheit $[-CH_2-CH(OCOCH_3)-]$ des Polymeren zu verstehen. Die Reaktion wird mit solchen Mengen an Alkalihydroxid durchgeführt, daß während der Veretherungs- und/oder Vernetzungsstufe die Estergruppen im Vinylpolymeren mehr oder weniger vollständig hydrolisiert werden, so daß eine Reaktion mit den Veretherungs- und/oder Vernetzungsmittel-Molekülen möglich ist.

Als Alkalisierungsmittel kommt aus wirtschaftlichen Gründen fast immer wäßrige NaOH-Lösung in Betracht, doch lassen sich auch andere wäßrige Alkalien wie KOH- oder LiOH-Lösungen verwenden. Als monofunktionell reagierende Veretherungsmittel werden vor allem Monohalogenalkancarbonsäuren wie Monochloressigsäure oder ihre Salze wie Na-monochloracetat eingesetzt, aber auch Methylchlorid, Ethylchlorid, Ethylenoxid, Propylenoxid allein oder in Mischung von zwei oder mehr von ihnen. Die so hergestellten Polyvinylether sollen Substitutionsgrade (DS oder MS)

aufweisen, daß sie für den DS zwischen 0,05 bis etwa 0,5 liegen, die MS-Werte können - bei Mehrfachsubstitution wie beispielsweise durch Alkylenoxide - entsprechend höher liegen.

Im erfindungsgemäßen Verfahren wird außer der Veretherungsreaktion auch eine dieser vorhergehende, gleichzeitig oder nachfolgend stattfindende Vernetzung durchgeführt, so daß die dabei entstehenden vernetzten Polyvinylether zu mehr als 40 Gew.-% wasserunlöslich und quellfähig sind, d. h. sie können Wasser in größerem Maße aufnehmen und auch mehr oder weniger gut zurückhalten, ohne dabei vollständig aufgelöst zu werden. Als mindestens bifunktionell reagierende Vernetzungsmittel sind insbesondere Dichloressigsäure, Phosphoroxychlorid oder Verbindungen geeignet, die als funktionelle Gruppe(n) mindestens zweimal

a) 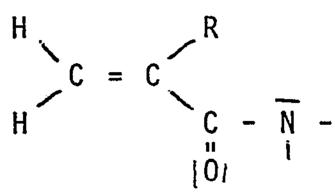 die Acrylamidogruppe, wobei R = H oder $CH_3$ ist,

b) 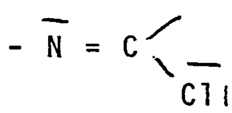 die Chlor-azomethingruppe,

c) $-\overline{N}=C-\overline{O}-CH_2-CH=CH_2$ die Allyloxy-azomethingruppe

oder mindestens einmal

d) 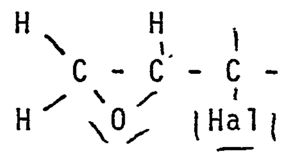 eine α-Halogen-epoxygruppe, wobei Hal = Cl oder Br ist

aufweisen.

Beispiele für solche, die genannten funktionellen Gruppen a) bis d) tragende Verbindungen sind:

Methylen-bisacrylamid
Bisacrylamido-essigsäure
N,N'-Dimethylol-methylen-bisacrylamid
1,1-Bisacrylamido-ethan
Methylen-bismethacrylamid
2,4,6-Trichlor-pyrimidin
2,4,5,6-Tetrachlor-pyrimidin
Cyanurchlorid
Triallylcyanurat
Epichlorhydrin

Bevorzugt werden Bisacrylamidoderivate oder Epichlorhydrin im erfindungsgemäßen Verfahren eingesetzt. Die Vernetzungsmittel können normalerweise nicht nur mit den bei der Hydrolyse der Estergruppen im Polyvinylacetat entstehenden Hydroxylgruppen bzw. den noch unveretherten durch die Hydrolyse entstehenden Hydroxylgruppen des teilweise veretherten Polyvinylderivats in Reaktion treten, sondern dies ist auch mit Hydroxylgruppen in den Ethersubstituenten selbst möglich, beispielsweise bei einem Hydroxyalkylgruppen tragenden Polyvinylether.

In einer bevorzugten Ausführungsform des erfindungsgemäßen Verfahrens werden auf 1 Mol Polyvinylacetat 1,5 bis 2,5 Mol Alkalihydroxid, 1,0 bis 3,0 Mol Wasser, 0,05 bis 0,3 Mol Vernetzungsmittel und 0,5 bis 1,2 Mol Veretherungsmittel eingesetzt. Wenn das Veretherungs- und/oder Vernetzungsmittel saure, d. h. Alkalihydroxid verbrauchende Gruppen (z. B. Carboxylgruppen) trägt, so muß entsprechend mehr Alkalihydroxid eingesetzt werden als bei neutralen oder bereits in der Salzform vorliegenden Verbindungen.

In allen Reaktionsstufen des erfindungsgemäßen Verfahrens werden zweckmäßig zusätzlich 4 bis 40, bevorzugt 6 bis 30 Gew.-Teile eines organischen Lösemittels pro Gew.-Teil Polyvinylacetat eingesetzt, wobei dieses Lösemittel vorteilhaft ein Alkohol mit einem bis sechs C-Atomen ist, beispielsweise Methanol, Ethanol, Isopropanol, n-Butanol, tert. Butanol oder Cyclohexanol, wobei diese organischen Lösemittel, insbesondere die höheren Alkohole, mit den Reaktionsteilnehmern wenig oder gar nicht reagieren. Bevorzugt wird dabei als Alkohol Isopropanol verwendet, zweckmäßig in der in der Technik gebräuchlichen Form mit etwa 13 Gew.-% Wasser.

Für die Vernetzung bestehen insbesondere drei Möglichkeiten der Reaktionsführung mit den folgenden Parametern, wobei die erste die bevorzugte Variante ist:

- Das Vernetzungsmittel wird vor der Veretherung mit Polyvinylacetat, wäßriger Alkalihydroxid-Lösung und einem organischen Lösemittel bei Raumtemperatur

H O E C H S T  A K T I E N G E S E L L S C H A F T
KALLE Niederlassung der Hoechst AG



während etwa 5 bis 45 min vermischt (Anvernetzung und Hydrolyse), nach Zugabe des Veretherungsmittels und weiterer Mengen Alkalihydroxid-Lösung wird dann die Temperatur auf bis zu etwa 90° C erhöht und die Reaktion während etwa 30 bis 90 min beendet.

- Polyvinylacetat, wäßrige Alkalihydroxid-Lösung und zweckmäßig ein organisches Lösemittel werden während etwa 5 bis 15 min bei Raumtemperatur vermischt, die Vernetzung erfolgt anschließend bei etwa 35° bis 80° C und während etwa 5 bis 30 min, nach Zugabe des Veretherungsmittels wird dann die Temperatur gehalten oder bis auf etwa 90° C erhöht und die Reaktion während etwa 20 bis 75 min beendet.

- Die Vernetzung und die Veretherung erfolgen gleichzeitig durch Vermischung des Polyvinylacetats, der wäßrigen Alkalihydroxid-Lösung und zweckmäßig einem organischen Lösemittel mit einem Vernetzungs- und einem Veretherungsmittel; dabei können die ersten drei Komponenten zunächst separat bis zu etwa 15 min lang vermischt werden, die Zugabe der Reaktionsmittel kann aber auch unmittelbar erfolgen; die eigentliche Veretherungs- und Vernetzungsreaktion wird bei etwa 30° bis 90° C während etwa 30 bis 90 min durchgeführt.

Das erfindungsgemäße Verfahren führt in den beschriebenen Ausführungsformen in der Regel zu Produkten, die noch einen gewissen wasserlöslichen Anteil im Bereich von etwa 5 bis 60 Gew.-%, bevorzugt von etwa 10 bis 50 Gew.-% enthalten.

Für viele Verwendungszwecke stört dies nicht, so daß sich ein Entfernen der wasserlöslichen Teile meist erübrigt. In einigen Fällen der Weiterverarbeitung und Anwendung von erfindungsgemäß hergestellten quellfähigen, vernetzten Polyvinylethern ist dieser Anteil sogar vorteilhaft, da er beispielsweise seine Haftfestigkeit an oder auf Unterlagen erhöht oder bessere Oberflächeneigenschaften (weniger harte Oberfläche) ergibt.

Die erfindungsgemäß hergestellten Produkte zeigen ein gutes Saug- und Quellvermögen und können die aufgenommene Menge an Flüssigkeit auch in ausreichender Menge zurückhalten. Sie können deshalb insbesondere zur Aufnahme und/ oder Zurückhaltung von wäßrigen Flüssigkeiten oder von Feuchte Verwendung finden, wozu beispielsweise die am Anfang der Beschreibung aufgeführten Anwendungsgebiete zählen.

Unter den in der Beschreibung und den Beispielen zur Charakterisierung der erfindungsgemäß hergestellten Produkte verwendeten Parameter ist folgendes zu verstehen:

DS durchschnittliche Anzahl von substituierten Acetatgruppen pro Polymereneinheit $[-CH_2-CH(OCOCH_3)-]$, sie beträgt maximal 1,0,

MS durchschnittliche Anzahl umgesetzter Moleküle (Ionen) der substituierenden Verbindungen pro Polymereneinheit $[-CH_2-CH(OCOCH_3)-]$, sie kann auch größer 1,0 sein,

HOECHST AKTIENGESELLSCHAFT
KALLE Niederlassung der Hoechst AG



WRV Wasserrückhaltevermögen des Produktes in g $H_2O$, gemessen gegen 1.600-fache Erdbeschleunigung, bezogen auf 100 g seines wasserunlöslichen Anteils; das WRV wird nach Eintauchen der Probe in Wasser bestimmt,

WUA wasserunlöslicher Anteil im Produkt in Gew.-%, und

$SV_{NaCl}$ Saugvermögen des Produktes in g an 1 %iger wäßriger NaCl-Lösung, die von 100 g des Produktes aufgesaugt wird.

Die folgenden Reaktionen werden so durchgeführt, daß das Reaktionsgemenge als Suspension vorliegt. Die Molangaben beziehen sich immer auf 1 Mol Polyvinylacetat; werden Reaktionskomponenten mehrmals während der Reaktion zugegeben, so bezieht sich die Molangabe auf die Summe der Einzelmengen.

<u>Beispiel 1</u>

Es werden 21,5 g Polyvinylacetat (Dispersionspulver mit einem unter 5 Gew.-% liegenden Polyvinylalkohol-Gehalt) in einer Rühreinrichtung mit 5,0 g einer 50 gew.-%igen wäßrigen NaOH-Lösung (= 0,25 Mol NaOH) und 3,7 g Epichlorhydrin (= 0,16 Mol) unter Zugabe von 200 g eines 87 gew.-%igen wäßrigen Isopropanols (= 8,1 Gew.-Teile 100 %igen Isopropanols, bezogen auf 1 Gew.-Teil Polyvinylacetat) während 15 min bei 20° C vermischt und dabei vernetzt. Danach werden 45 g einer 50 gew.-%igen wäßrigen NaOH-Lösung (= 2,24 Mol NaOH und 2,8 Mol Gesamt-$H_2O$) und 34,8 g Na-monochloracetat (= 1,2 Mol) zugegeben und es wird während 60 min bei 80° C

HOECHST AKTIENGESELLSCHAFT
KALLE Niederlassung der Hoechst AG



verethert. Das Reaktionsgemenge wird anschließend mit Eisessig gegen Phenolphthalein neutralisiert, filtriert und der Rückstand mehrmals mit 80 gew.-%igem wäßrigem Methanol salzfrei gewaschen und bei etwa 60° C getrocknet; DS = 0,4, WRV = 19.000, WUA = 65, $SV_{NaCl}$ = 2.800.

Beispiel 2

Es wird nach Beispiel 1 verfahren, aber in der Vernetzungsstufe mit 5,6 g Epichlorhydrin (= 0,24 Mol) und in der Veretherungsstufe mit 35 g einer 50 gew.-%igen wäßrigen NaOH-Lösung (= 1,76 Mol NaOH und 2,5 Mol Gesamt-$H_2O$) und 17,4 g Na-monochloracetat (= 0,6 Mol); DS = 0,28, WRV = 10.800, WUA = 87, $SV_{NaCl}$ = 2.400.

HOECHST AKTIENGESELLSCHAFT
KALLE Niederlassung der Hoechst AG



## Patentansprüche

1. Verfahren zur Herstellung von quellfähigen, zu mehr als 40 Gew.-% wasserunlöslichen, vernetzten und veretherten Polyvinylderivaten, dadurch gekennzeichnet, daß Polyvinylacetat unter vorhergehender, gleichzeitiger oder nachfolgender Vernetzung mit mindestens einem bifunktionell gegenüber Hydroxylgruppen reaktionsfähigen Vernetzungsmittel in wäßrig-alkalischem, gegebenenfalls ein organisches Lösemittel enthaltendem Medium verethert wird.

2. Verfahren nach Anspruch 1, dadurch gekennzeichnet, daß auf 1 Mol Polyvinylacetat

| | | | | |
|---|---|---|---|---|
| 1,0 | bis | 3,5 | Mol | Alkalihydroxid, |
| 0,5 | bis | 5,0 | " | Wasser, |
| 0,01 | bis | 0,5 | " | Vernetzungsmittel und |
| 0,1 | bis | 1,5 | " | Veretherungsmittel |

eingesetzt werden.

3. Verfahren nach Anspruch 1 oder 2, dadurch gekennzeichnet, daß auf 1 Mol Polyvinylacetat

| | | | | |
|---|---|---|---|---|
| 1,5 | bis | 2,5 | Mol | Alkalihydroxid, |
| 1,0 | bis | 3,0 | " | Wasser, |
| 0,05 | bis | 0,3 | " | Vernetzungsmittel und |
| 0,5 | bis | 1,2 | " | Veretherungsmittel |

eingesetzt werden.

4. Verfahren nach Anspruch 2 oder 3, dadurch gekennzeichnet, daß zusätzlich 4 bis 40 Gew.-Teile, bevorzugt 6 bis 30 Gew.-Teile, eines organischen Lösemittels pro Gew.-Teil Polyvinylacetat eingesetzt werden.

HOECHST AKTIENGESELLSCHAFT
KALLE Niederlassung der Hoechst AG



5. Verfahren nach einem der Ansprüche 1 bis 4, dadurch gekennzeichnet, daß als Vernetzungsmittel Dichloressigsäure, Phosphoroxychlorid oder eine Verbindung eingesetzt wird, die als funktionelle Gruppe(n) mindestens zweimal

a) 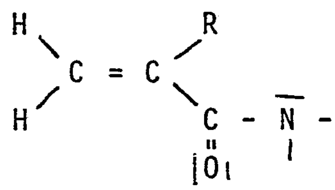 die Acrylamidogruppe, wobei R = H oder $CH_3$ ist,

b) 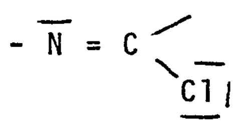 die Chlor-azomethingruppe,

c) 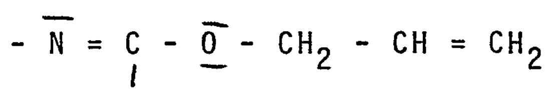 die Allyloxy-azomethingruppe

oder mindestens einmal

d) 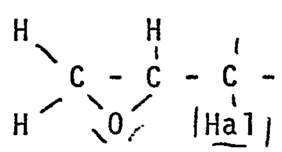 eine α-Halogen-epoxygruppe, wobei Hal = Cl oder Br ist

aufweist.

6. Verfahren nach einem der Ansprüche 1 bis 5, dadurch gekennzeichnet, daß als Veretherungsmittel Monohalogenalkancarbonsäuren oder ihre Salze eingesetzt werden.

7. Verfahren nach einem der Ansprüche 1 bis 6, dadurch gekennzeichnet, daß als Veretherungsmittel Monochloressigsäure oder eines ihrer Salze eingesetzt wird.

H O E C H S T   A K T I E N G E S E L L S C H A F T
KALLE Niederlassung der Hoechst AG



8. Verfahren nach einem der Ansprüche 1 bis 7, dadurch gekennzeichnet, daß als organisches Lösemittel ein Alkohol mit 1 bis 6 C-Atomen eingesetzt wird.

9. Verfahren nach einem der Ansprüche 1 bis 7, dadurch gekennzeichnet, daß als organisches Lösemittel Isopropanol eingesetzt wird.

10. Verfahren nach einem der Ansprüche 1 bis 9, dadurch gekennzeichnet, daß als Vernetzungsmittel ein Bisacrylamido-Derivat oder Epichlorhydrin eingesetzt wird.

11. Verwendung der nach einem Verfahren gemäß einem der Ansprüche 1 bis 10 hergestellten vernetzten und veretherten Polyvinylderivaten zur Aufnahme und/oder Zurückhaltung von wäßrigen Flüssigkeiten oder von Feuchte.

0021130

Europäisches Patentamt

# EUROPÄISCHER RECHERCHENBERICHT

Nummer der Anmeldung
EP 80 10 3055

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | CHEMICAL ABSTRACTS, Band 62, 1965, Ref. 13263b<br>COLUMBUS, Ohio (US)<br>H. MASAO: "Poly(vinyloxyacetic acid). V. Preparation from poly (vinylacetate) by simultaneous saponification and etherification"<br>& Sen-i Gakkashi 17(8) (1961)<br>* Ganzes Dokument *<br>----- | 1,4,6, 7,11 |

KLASSIFIKATION DER ANMELDUNG (Int.Cl. 3)

C 08 F 8/00
A 61 L 15/00//

RECHERCHIERTE SACHGEBIETE (Int. Cl. 3)

C 08 F 8/00
8/02
A 61 L 15/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 11-09-1980 | PEETERS |